# EUROPÄISCHE PATENTSCHRIFT

(11) **EP 1 403 349 B1**
(45) Veröffentlichungstag und Bekanntmachung des Hinweises auf die Patenterteilung: **14.07.2004**
(21) Anmeldenummer: 02008544.5
(22) Anmeldetag: 16.04.2002
(51) Int. Cl.: C09D 183/06, C09D 183/12, C09D 7/12, C09D 11/10

(54) **Verwendung von mit Oxyalkylenethergruppen modifizierten Epoxypolysiloxanen als Additive für strahlenhärtende Beschichtungen**
Use of oxyalkylenegroup modified epoxypolysiloxanes as an additive for radiation curable coatings
Utilisation des epoxypolysiloxanes modifiées par des groupes oxyalkyleneether comme additifs pour revêtements durcissables par rayonnement

(43) Veröffentlichungstag der Anmeldung: 31.03.2004
(73) Patentinhaber: Goldschmidt AG, 45127 Essen (DE)
(72) Erfinder: Busch, Stefan, 44791 Bochum (DE); Oestreich, Sascha, Dr., 45279 Essen (DE); Silber, Stefan, Dr., 47804 Krefeld (DE); Struck, Susanne, 47198 Duisburg (DE)

(56) Entgegenhaltungen:
- EP-A- 0 430 102
- EP-A- 0 468 270

## Beschreibung

Gegenstand der Erfindung ist die Verwendung von mit Oxyalkylenethergruppen modifizierten Epoxypolysiloxanen als Additive für kationisch strahlenhärtende Beschichtungen.

Die mit Oxyalkylenethergruppen modifizierten Epoxypolysiloxane weisen ausgezeichnete Eigenschaften als Additive in kationisch strahlenhärtenden Beschichtungen, insbesondere Druckfarben und Drucklacken, auf. Die mit Oxyalkylenethergruppen modifizierten Epoxypolysiloxane fördern den Verlauf und die Netzeigenschaften der noch flüssigen Beschichtungen, Druckfarben und/oder Drucklacke. Die gehärteten Beschichtungen, Druckfarben und/oder Drucklacke besitzen neben guten Release-Eigenschaften eine verbesserte Kratzfestigkeit und erhöhte Gleitfähigkeit.

Die Strahlenhärtung durch UV-Licht oder Elektronenstrahlen ist ein schneller, effizienter und umweltschonender Weg, um polymerisierbare Monomere oder Oligomere zu härten. Keine Emissionen, geringe Investitionskosten und niedriger Energiebedarf durch kurze Trockenanlagen, hohe Produktionszahlen dank schneller Härtung und in vielen Fällen eine bessere Qualität der Beschichtung, vor allem hinsichtlich Glanz und Abriebfestigkeit, sind Gründe dafür, dass auf dem Gebiet der Industrielacke die Strahlenhärtung die expansivste Applikationsform darstellt.

Strahlenhärtende Beschichtungen, Druckfarben und/oder Drucklacke sind bekannt und beispielsweise in "UV & EB Curing Formulations for Printing Inks, Coatings & Paints" (R. Holman, P. Oldring, London 1988) oder in der Broschüre "CYRACURE Cycloaliphatic Epoxides, Cationic UV Cure" (The Dow Chemical Company, Midland, Michigan, USA) beschrieben.

Im Gegensatz zu den radikalisch strahlenhärtenden Beschichtungen, Druckfarben und/oder Drucklacken, die häufig über eine zu schnelle Aushärtung, großen Volumenschrumpf und dadurch verursacht, über eine geringe Adhäsion verfügen, härten kationisch strahlenhärtende Beschichtungen, Druckfarben und/oder Drucklacke langsamer aus, zeigen bei der Aushärtung einen geringen Schrumpf und eine gute Anfangsadhäsion. Zusätzlich wird der Härtungsprozess nicht durch Luftsauerstoff inhibiert.

Daher werden kationisch strahlenhärtende Beschichtungen, Druckfarben und/oder Drucklacke vorzugsweise für die Beschichtung von hochwertigen Metalloberflächen, zum Bedrucken von Folien (z.B. Polyethylen-, Polypropylen- oder Polyesterfolien) und zum Beschichten flexibler Substrate (z.B. Tuben, Becher, etc.), verwendet.

Bei der industriellen Herstellung bereitet die Handhabung solch hochwertiger Erzeugnisse oft Schwierigkeiten. So ist nicht immer zu vermeiden, dass nach der strahlungsinduzierten Aushärtung der Beschichtung, Druckfarbe und/oder des Drucklackes die Erzeugnisse Schäden durch Stapeln oder andere manuelle Belastungen erleiden.

Bei der Herstellung bedruckter Verpackungsmaterialien ist darüber hinaus eine rasche Release-Wirkung der Druckfarbe wünschenswert, so dass schon kurz nach dem Druckvorgang aufgebrachte Etiketten oder Codierungen zu einem späteren Zeitpunkt ohne Beschädigung des Druckbildes wieder entfernt werden können.

Es sind Verfahren bekannt, die Handhabbarkeit frisch bedruckter Gegenstände dadurch zu verbessern, dass man der Druckfarbe und/oder dem Drucklack reibungsmindernde Zusätze wie Öle oder Wachse (z.B. Polyethylen- oder Polytetrafluorethylenwachse) zusetzt. Dies führt jedoch häufig zu einem störenden Glanzverlust. Das nachträgliche Aufbringen von Wachs auf das Druckerzeugnis kann auch nicht immer befriedigen, zumal durch diesen zusätzlichen Verfahrensschritt die Fertigungskosten erhöht werden. Auch werden hohe Einsatzkonzentrationen benötigt, um eine Verbesserung der Kratzfestigkeit zu erzielen. Eine signifikante Release-Wirkung wird so nicht erreicht.

Weiterhin werden Siliconöle oder auch organisch modifizierte Siloxane, wie zum Beispiel Polyethersiloxane, zu diesem Zweck eingesetzt. Solche Siliconeprodukte verbessern nicht nur die Gleit- und Release-Eigenschaften der gehärteten Beschichtung, Druckfarbe und/oder des Drucklackes, sie verbessern auch Verlauf und Netzeigenschaften der noch flüssigen Materialien.

Einfache Siliconöle werden jedoch bei der kationischen Härtung nicht kovalent in den Film eingebaut. Werden die Silicone nicht chemisch eingebaut, so können diese Zusätze aufgrund ihrer Inkompatibilität mit der Zeit an die Oberfläche der Beschichtung migrieren. Das Silicon kann in nachfolgenden Druckprozessen an Stellen gelangen an denen es störend wirkt. Insbesondere ist nicht zu vermeiden, dass bei Stapelvorgängen das Siliconadditiv an die Rückseite des darüberliegenden Druckerzeugnisses gelangt.

Weiterhin ist besonders in der Nahrungsmittelindustrie darauf zu achten, dass der Anteil migrierfähiger Bestandteile in der Beschichtung möglichst gering ist, so dass keine Migration des Siliconadditives in die Nahrungsmittel stattfinden kann.

Verwendung finden auch einfache Carbinol funktionelle Siloxane, wie zum Beispiel Polyethersiloxane. Es ist jedoch bekannt, dass Alkohole als Kettenüberträger wirken (zum Beispiel: J.V. Crivello, S. Liu, Journal of Polymer Science: Part A: Polymer Chemistry, Vol. 38, 389-401, 2000). Sie setzen das Molekulargewicht der wachsenden Polymerketten herab und verringern so die Durchhärtung der kationisch strahlenhärtbaren Beschichtung, Druckfarbe und/oder des Drucklackes. Rein Carbinol funktionelle Siloxane zeigen in der kationischen Strahlenhärtung keine aktive Härtung, sie können nur als Kettenüberträger wirken (Schema 1).

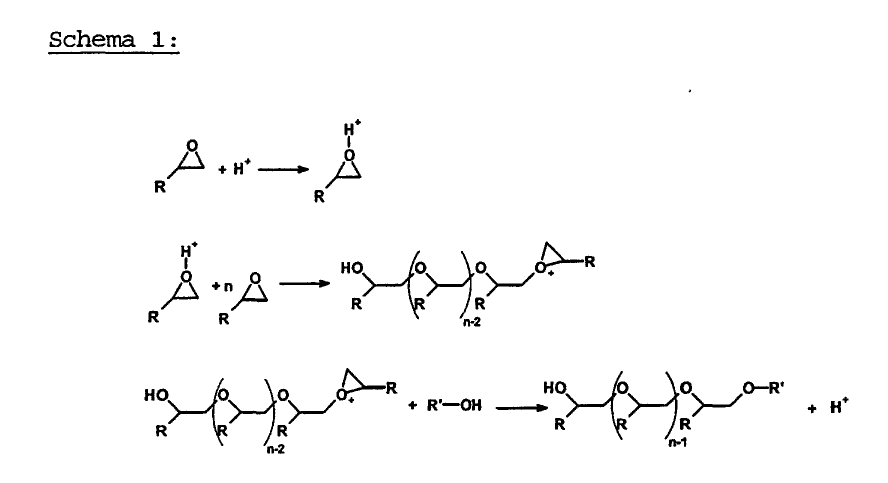

Das Fehlen einer aktiven kationischen Härtung ist insbesondere bei heterogenen Systemen problematisch. Liegt das Carbinol funktionelle Siloxan phasengetrennt in Tropfenform im Monomersystem vor, so erfolgt keine Aushärtung und das Carbinol funktionelle Siloxan kann frei in der Beschichtung migrieren.

Es war die Aufgabe der vorliegenden Erfindung organisch modifizierte Siloxane bereitzustellen, die eine aktive kationische Härtung zeigen, die Verlauf und Netzeigenschaften von flüssigen, kationisch strahlenhärtbaren Beschichtungen, Druckfarben und/oder Drucklacken verbessern und die Gleit- und Release-Eigenschaften der kationisch strahlengehärteten Beschichtungen, Druckfarben und/oder Drucklacken positiv beeinflussen.

Überraschenderweise wurde nun gefunden, dass vorgenannte Aufgabe gelöst wird durch die Verwendung von mit Oxyalkylenethergruppen modifizierten Epoxypolysiloxanen, welche mindestens eine an ein Si-Atom des Epoxypolysiloxans gebundene Oxyalkylenethergruppe enthalten, als Additive in kationisch strahlenhärtenden Beschichtungen, Druckfarben und/oder Drucklacken.

Ein Gegenstand der Erfindung ist daher die Verwendung von mit Oxyalkylenethergruppen modifizierten Epoxypolysiloxanen, welche mindestens eine an ein Si-Atom des Epoxypolysiloxans gebundene Gruppe der allgemeinen Formel (I)

- R³-O-(CₙH₍₂ₙ₋ₘ₎R⁴ ₘO-)ₓR⁵ (I)

enthalten, worin
- R³: ein zweiwertiger, gegebenenfalls substituierter Alkyl- oder Alkylenrest mit 2 bis 11 Kohlenstoffatomen,
- n: 2 bis 8,
- m: 0 bis 2n,
- x: einen Wert von 1 bis 200 hat, und
- R⁴: für gleiche oder verschiedene Alkylreste mit 1 bis 20 Kohlenstoffatomen oder für gleiche oder verschiedene gegebenenfalls substituierte Phenylreste mit bis zu 20 Kohlenstoffatomen steht,
- R⁵: ein Wasserstoffrest, ein gegebenenfalls substituierter Alkylrest mit 1 bis 6 Kohlenstoffatomen, ein Acylrest oder ein -O-CO-NH-R⁶-Rest ist, bei dem
R⁶ ein gegebenenfalls substituierter Alkyl- oder Arylrest ist, wobei
die Oxyalkylensegmente -(CₙH₍₂ₙ₋ₘ₎R⁴ₘO-) innerhalb eines Oxyalkylenetherrestes untereinander verschieden sein können, sowie die Reihenfolge der einzelnen Oxyalkylensegmente - (CₙH₍₂ₙ₋ₘ₎R⁴ₘO-) beliebig sein kann und insbesondere Blockcopolymere, statistische Polymere sowie deren Kombinationen umfasst, als Additive in kationisch strahlenhärtende Beschichtungen, Druckfarben und/oder Drucklacken.

Ein weiterer Gegenstand der Erfindung ist dadurch gekennzeichnet, dass als mit Oxyalkylenethergruppen modifizierte Epoxypolysiloxane Verbindungen der allgemeinen Formel (Ia) 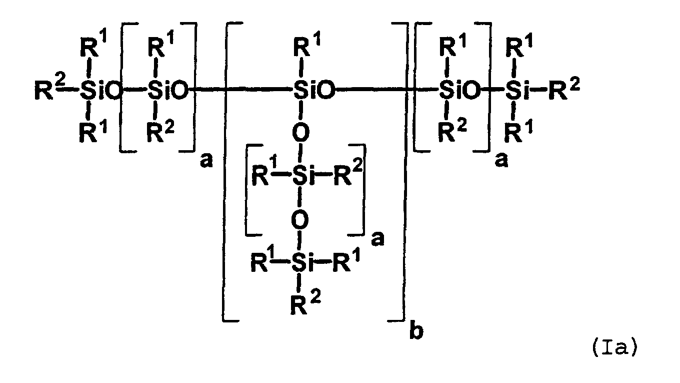 worin
- R¹: im Molekül gleich oder verschieden ist und Alkylreste mit 1 bis 4 Kohlenstoffatomen bedeutet,
- R²: folgende Bedeutung hat:
a) Alkylreste mit 1 bis 20 Kohlenstoffatomen, Aryl- oder Aralkylreste,
b) Epoxyreste, die über SiC-Bindungen mit Si-Atomen des Polysiloxans verknüpft sind,
c) Oxyalkylenetherreste der allgemeinen Formel (I)

   -R³-O-(CₙH₍₂ₙ₋ₘ₎R⁴ ₘO-)ₓR⁵

   wobei
   R³ ein zweiwertiger, gegebenenfalls substituierter Alkyl- oder Alkylenrest mit 2 bis 11 Kohlenstoffatomen,
   n 2 bis 8,
   m 0 bis 2n,
   x einen Wert von 1 bis 200 hat,
   und
   R⁴ für gleiche oder verschiedene Alkylreste mit 1 bis 20 Kohlenstoffatomen oder für gleiche oder verschiedene gegebenenfalls substituierte Phenylreste mit bis zu 20 Kohlenstoffatomen steht,
   R⁵ ein Wasserstoffrest, ein gegebenenfalls substituierter Alkylrest mit 1 bis 6 Kohlenstoffatomen, ein Acylrest oder ein -O-CO-NH-R⁶-Rest ist, bei dem
   R⁶ ein gegebenenfalls substituierter Alkyl- oder Arylrest ist, wobei die Oxyalkylensegmente (CₙH₍₂ₙ₋ₘ₎R⁴ₘO-) innerhalb eines Oxyalkylenetherrestes untereinander verschieden sein können, sowie die Reihenfolge der einzelnen Oxyalkylensegmente (CₙH₍₂ₙ₋ₘ₎R⁴ₘO-) beliebig sein kann und insbesondere Blockcopolymere, statistische Polymere sowie deren Kombinationen umfasst,
   a einen Wert von 1 bis 1000 und
   b einen Wert von 0 bis 10 hat,
   mit der Maßgabe, dass im durchschnittlichen Organopolysiloxanmolekül jeweils mindestens ein Rest
   R² die Bedeutung b) und die Bedeutung c) hat, als Additive in kationisch strahlenhärtende Beschichtungen, Druckfarben und/oder Drucklacken verwendet werden.

Ein weiterer Gegenstand der Erfindung ist dadurch gekennzeichnet, dass in der Formel (I) R³ ein Alkylrest mit 2 bis 6 C-Atomen, R⁴ ein Methyl-, Ethyl- oder Phenylrest, m 0 oder 1 und x 1 bis 50 bedeuten.

Ein weiterer Gegenstand der Erfindung ist dadurch gekennzeichnet, dass R¹ in der Formel (Ia) Methylreste bedeuten und a einen Wert von 1 bis 500, b einen Wert von 0 bis 10 und x einen Wert von 1 bis 100 hat.

Ein weiterer Gegenstand der Erfindung ist dadurch gekennzeichnet, dass die Additive der Formeln (I) und (Ia) in Konzentrationen von 0,01 bis 10 Gew.-%, bezogen auf Gesamtformulierungen, mitverwendet werden.

Ein weiterer Gegenstand der Erfindung ist dadurch gekennzeichnet, dass die Additive der Formeln (I) und (Ia) in Mischungen mit härtbaren Verbindungen, welche Epoxy-, Oxiran- und/oder Vinylethergruppen aufweisen, insbesondere Epoxy-, Oxiranund/oder Vinylethergruppen enthaltenden Organo-polysiloxanen, welche jedoch frei von der Gruppe der allgemeinen Formel (I) sind, als Additive in kationisch strahlenhärtende Beschichtungen, Druckfarben und/oder Drucklacken, mitverwendet werden.

Beispiele für den Rest R¹ sind Alkylreste mit 1 bis 4 Kohlenstoffatomen, wie Methyl-, Ethyl-, Propyl- und/oder Butylreste. Besonders bevorzugt sind Methylreste.

Beispiele für den Rest R² sind:
a) Alkylreste mit 1 bis 20 Kohlenstoffatomen, Aryl- oder Aralkylreste. Beispiele für Alkylreste sind der Methyl-, Ethyl-, Propyl-, Butyl-, Hexyl-, Octyl-, Decyl-, Dodecyl-, Hexadecyl- oder Octadecylrest. Als Arylrest kommt insbesondere der Phenylrest und als Aralkylrest der Benzyloder Phenethylrest in Frage. Besonders bevorzugt sind Methyl- und Phenylreste.
b) Epoxyreste, wobei der Epoxyrest über eine Si-C Bindung mit einem Si-Atom des Polysiloxanes verknüpft ist. Die Epoxyreste enthalten wenigstens eine polymerisierbare Gruppe der allgemeinen Formel (II) 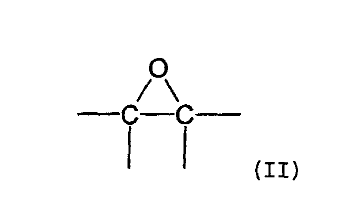 wobei folgende Reste als Beispiele für Epoxyreste genannt werden 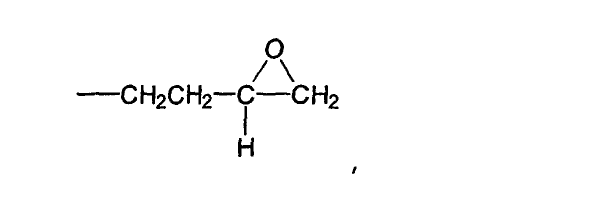 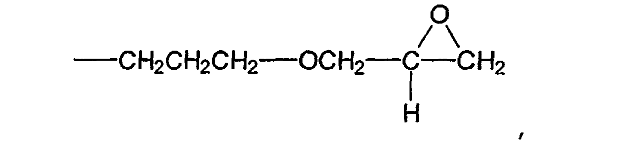 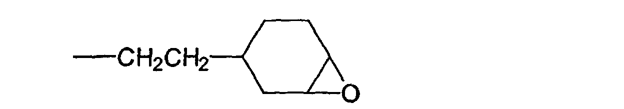 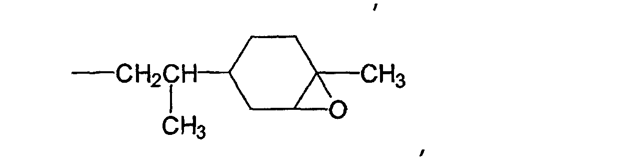 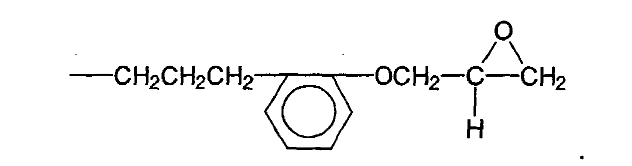
   Besonders bevorzugt sind die Epoxyreste 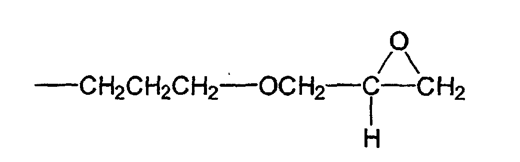 und 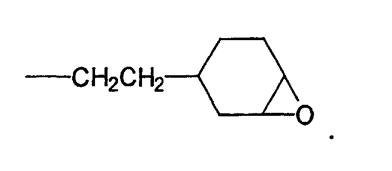
c) Oxyalkylenetherreste der allgemeinen Formel (I)

   -R³-O-(CₙH₍₂ₙ₋ₘ₎R⁴ ₘO-)ₓR⁵
wobei die Reste R³, R⁴ und R⁵ sowie die Indices m, n und x die oben angegebene Bedeutung aufweisen.

Beispiele für solche Reste R² sind:

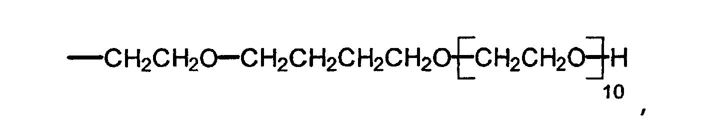

―(CH₂)₃O―(CH₂CH₂O)₈-CH₃,

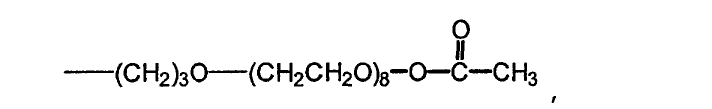

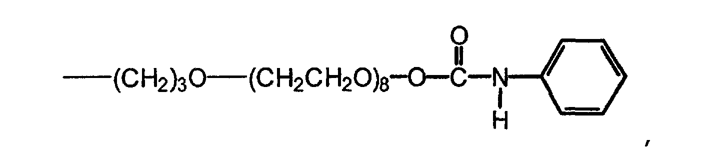

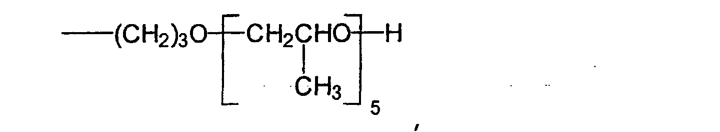

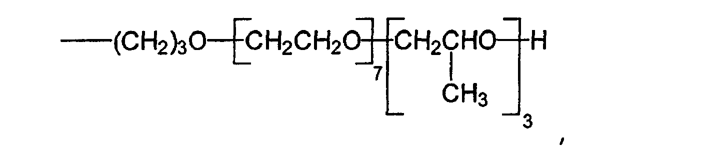

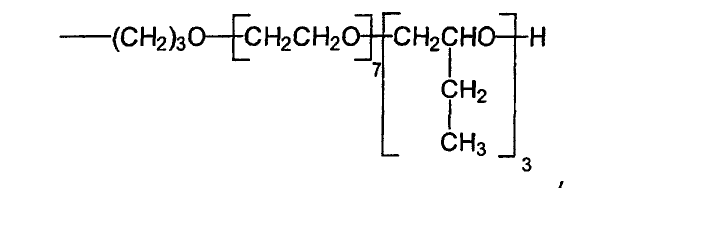

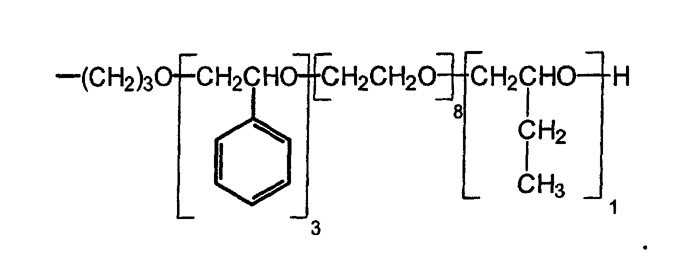

Beispiele für den Rest R⁴ sind gleiche oder verschiedene Alkylreste mit 1 bis 20 Kohlenstoffatomen, wie der Methyl-, Ethyl-, Propyl-, Isopropyl-, Butyl-, Isobutyl-, Hexyl-, Decyl-, Dodecyl-, Hexadecyl- oder Octadecylrest, oder gegebenenfalls substituierte Phenylreste mit bis zu 20 Kohlenstoffatomen, wie der Phenyl- oder Toluylrest.
Besonders bevorzugt sind der Methyl-, Ethyl- und der Phenylrest.

Beispiele für den Rest R⁵ sind der Wasserstoffrest, ein gegebenenfalls substituierter Alkylrest mit 1 bis 6 Kohlenstoffatomen, wie der Methyl-, Ethyl-, Propyl-, Isopropyl, Butyl-, Isobutyl-, Hexyl- Isohexylrest, ein Acylrest wie der Formyl, Acetyl-, Propionyl-, Butyryl-, Isobutyryl-, Valeryl-, Isovaleryl-, Pivaloyl-, Palmitoyl-, Stearoyl-, Icosanoyl-, Acryloyloder Methacryloylrest.
Besonders bevorzugt sind Alkylreste, wie der Methylrest und Acylreste, wie der Acetyl-, Acryloyl- und Methacryloylrest.

Beispiele für R⁶ einen gegebenenfalls substituierten Alkyloder Arylrest sind Alkylreste, wie der Methyl-, Ethyl-, Propyl-, Isopropyl-, Butyl-, Isobutyl-, Hexyl-, Isohexylrest, Decyl- oder Octadecylrest und Arylreste, wie der Phenyl- oder Toluylrest.

In einer bevorzugten Ausführungsform der vorliegenden Erfindung sind die mit Oxyalkylenethergruppen modifizierten Epoxypolysiloxane dadurch gekennzeichnet, dass
- a: einen Wert von 1 bis 500, insbesondere 1 bis 250,
- b: einen Wert von 0 bis 10, insbesondere 0 bis 5,
- x: einen Wert von 1 bis 100, insbesondere 1 bis 50 hat.

Beispiele für erfindungsgemäß zu verwendende mit Oxyalkylenethergruppen modifizierte Epoxypolysiloxane sind in den Formeln wiedergegeben:

### Verbindung 1:

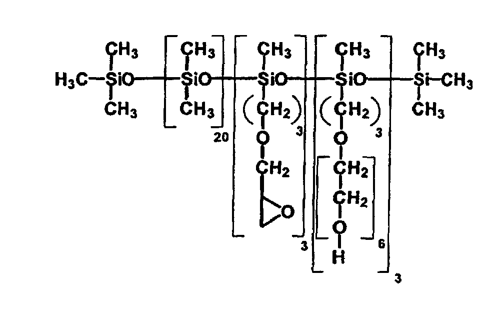

### Verbindung 2:

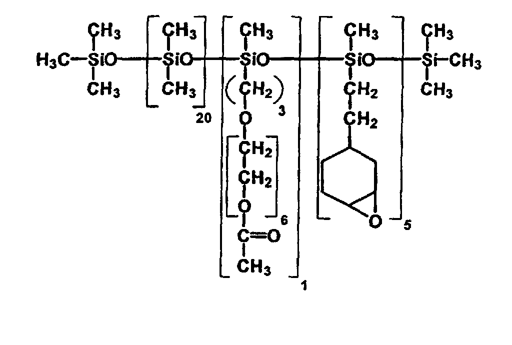

### Verbindung 3:

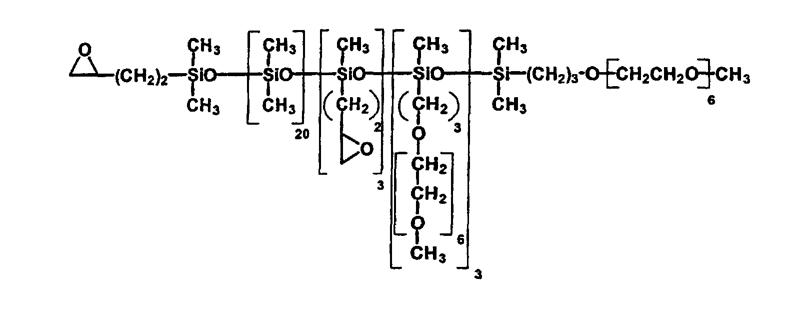

### Verbindung 4:

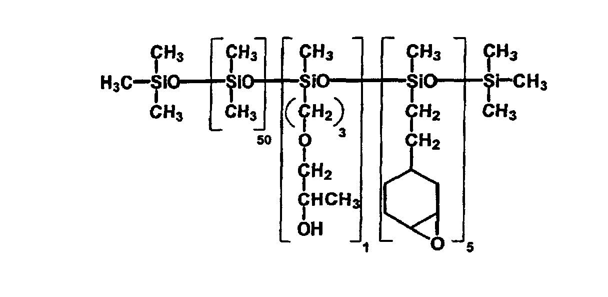

### Verbindung 5:

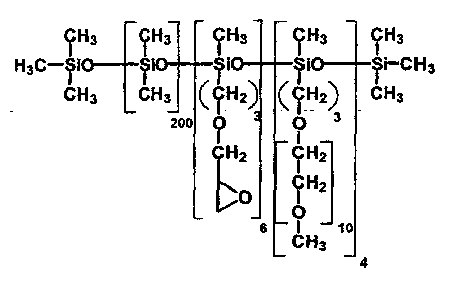

Die Herstellung der mit Oxyalkylenethergruppen modifizierten Epoxysiloxane ist in EP-A-0 468 270 beschrieben. EP-A-0 468 270 beschreibt weiterhin die Verwendung von mit Oxyalkylenethergruppen modifizierten Epoxysiloxanen als strahlenhärtbare Beschichtungsmittel für Trennbeschichtungen. Solche Trennbeschichtung werden zum Beispiel in Klebebändern eingesetzt, wo ein Trägerband mit einem druckempfindlichen Kleber und auf der anderen Oberfläche des Trägerbandes mit einer Trennbeschichtung mit abhäsiven Eigenschaften beschichtet ist. Die abhäsive Eigenschaft der Trennbeschichtung ist hier notwendig, um ein permanentes Verkleben der Klebebandrolle zu verhindern und ein leichtes Abrollen des Klebebandes zu gewährleisten.

Kationisch strahlenhärtende Beschichtungen, Druckfarben und/oder Drucklacke sind bekannt und beispielsweise in UV & EB Curing Formulations for Printing Inks, Coatings & Paints" (R. Holman, P. Oldring, London 1988) oder in der Broschüre "CYRACURE Cycloaliphatic Epoxides, Cationic UV Cure" (The Dow Chemical Company, Midland, Michigan, USA) beschrieben.

Die erfindungsgemäßen mit Oxyalkylenethergruppen modifizierten Epoxysiloxane können in strahlenhärtenden Beschichtungen, Druckfarben und/oder Drucklacken in einer Konzentration von 0,01 bis 10,0 Gew.-% vorzugsweise von 0,5 bis 2 Gew.-% enthalten sein.

Gegebenenfalls können sie in Mischungen mit härtbaren Verbindungen, welche Epoxy-, Oxiran- und/oder Vinylethergruppen aufweisen, insbesondere Epoxy-, Oxiran- und/oder Vinylethergruppen enthaltenden Organo-polysiloxanen, welche jedoch frei von der Gruppe der allgemeinen Formel (I) sind, und/oder in Mischung mit Oxyalkylenethergruppen enthaltenden Polysiloxanen als Additive in kationisch strahlenhärtende Beschichtungen, Druckfarben und/oder Drucklacken mitverwendet werden.
Die Anteile an diesen Komponenten sind gering zu halten und diese Mischungen sind erfindungsgemäß nicht bevorzugt.

Die Art der Gruppe R² beeinflusst unmittelbar die Verträglichkeit der mit Oxyalkylenethergruppen modifizierten Epoxysiloxane mit der Beschichtung, Druckfarbe und/oder dem Drucklack.

### Ausführungsbeispiele:

Die Erfindung wird nachfolgend anhand von Ausführungsbeispielen näher erläutert. Dazu werden die erfindungsgemäßen Verbindungen 1 bis 5 und die folgenden nicht erfindungsgemäßen Vergleichsbeispiele 1 bis 3 verwendet.

### Vergleich 1:

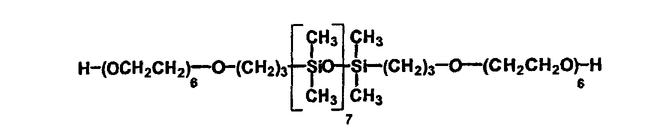

### Vergleich 2:

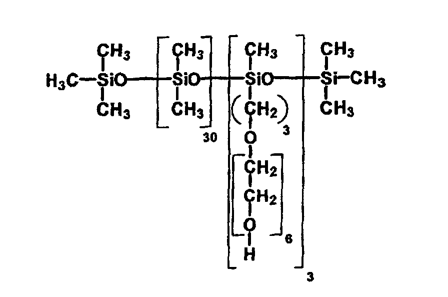

### Vergleich 3:

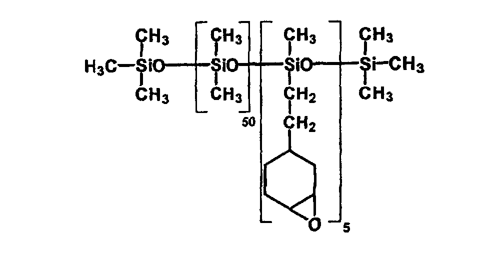

Zur Überprüfung der aktiven Härtung der Siliconadditive (Verbindung 1 bis 5 und Vergleich 1 bis 3) wurden die Siliconadditive mit 5 Gew.-% CYRACURE® Photoinitiator UVI-6990 versetzt und 12µm naß auf Leneta®-Folie aufgerakelt. Die Härtung erfolgt durch Einwirkung von UV-Licht mit 120 W/cm mit einer Bahngeschwindigkeit von 3 m/min. Dieser Vorgang wird jeweils zweimal wiederholt. Anschließend wird die Oberfläche auf ihre Aushärtung hin beurteilt. Die Ergebnisse sind in Tabelle 1 zusammengefasst.

**Tabelle 1:**

| **Verbindung** | **Härtung** |
|---|---|
| Verbindung 1 | Gehärtet |
| Verbindung 2 | Gehärtet |
| Verbindung 3 | Gehärtet |
| Verbindung 4 | Gehärtet |
| Verbindung 5 | Gehärtet |
| | |
| Vergleich 1 | Flüssig |
| Vergleich 2 | Flüssig |
| Vergleich 3 | Gehärtet |

Es zeigt sich, dass nur die epoxyfunktionellen Siloxane eine aktive kationische Härtung zeigen. Rein Carbinol funktionelle Siloxane (Vergleich 1 und 2) zeigen keine aktive kationische Härtung.

Zur Überprüfung der anwendungstechnischen Eigenschaften wurden die folgenden Beschichtungs- und Druckfarbenrezepturen aus der Broschüre "CYRACURE Cycloaliphatic Epoxides, Cationic UV Cure" (The Dow Chemical Company, Midland, Michigan, USA) ausgewählt.

### Rezeptur 1:

70,9 g CYRACURE® Cycloaliphatic Epoxide UVR-6110
24,6 g TONE® Polyol 0301
6,0 g CYRACURE® Photoinitiator UVI-6990
0,5 g Siliconadditiv

### Rezeptur 2:

81,2 g CYRACURE® Cycloaliphatic Epoxide UVR-6110
10,1 g Lithol® Rubin D4569 der Firma BASF
7,3 g CYRACURE® Photoinitiator UVI-6990
0,5 g Siliconadditiv.

Die Beschichtungen, Druckfarben und/oder Drucklacke werden auf übliche Weise gemäß den vorstehenden Rezepturen formuliert. Als letzter Rezepturbestandteil werden jeweils die Siliconadditive hinzugegeben.

Zur Bestimmung des Schaumverhaltens der Siliconadditive in den flüssigen Beschichtungen, Druckfarben und/oder Drucklacken, werden jeweils 50 g der flüssigen Formulierung (Rezeptur 1) in ein 100 ml Glas gegeben und 3 min bei 4.000 U/min mit einem Ultraturax gerührt. Danach wird die Schaumhöhe als Differenz zur Höhe des Flüssigkeitsspiegels der nicht gerührten Formulierung angegeben.

Zur Bestimmung der anwendungstechnischen Eigenschaften der gehärteten Beschichtungen (Rezeptur 1) werden die Formulierungen mittels eines Spiralrakels 12µm naß auf Leneta®-Folie aufgerakelt. Die Härtung erfolgt durch Einwirkung von UV-Licht mit 120 W/cm mit einer Bahngeschwindigkeit von 10 m/min Dieser Vorgang wird jeweils zweimal wiederholt.

Anschließend wird der Verlauf optisch beurteilt. Die Beurteilung erfolgt auf einer Skala von 1 bis 4, wobei 1 einen störungsfreien Film beschreibt, 4 von starken Verlaufsstörungen zeugt.

Der Gleitwert der gehärteten Beschichtung wird mit Hilfe eines speziell umgebauten elektromotorischen Filmaufziehgerätes mit konstantem Vorschub bestimmt. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der die beschichtete Leneta®-Folie befestigt ist, bewegt werden. Um den Gleitwert zu bestimmen, wird ein Gewicht (200 g) mit flächiger Filzunterlage auf die beschichtete Folie gesetzt. Die auf der Platte befindliche beschichtete Folie wird mit einer Geschwindigkeit von 11 mm/s unter dem Gewicht weggezogen. Die hierfür notwendige, vertikale Kraft wird mit Hilfe eines Kraftaufnehmers gemessen und als Gleitwert bezeichnet.

Das Benetzungsverhalten wird dadurch bestimmt, in dem die wie zuvor beschriebenen Filme visuell auf Benetzungsstörungen hin untersucht werden. Die Beurteilung erfolgt auf einer Skala von 1 bis 4, wobei 1 einen störungsfreien Film beschreibt, 4 von starken Benetzungsstörungen zeugt.

Die Release-Eigenschaften der gehärteten Beschichtungen werden durch die Bestimmung des sog. Trennwertes charakterisiert. Für die Ermittlung der Trennwerte werden 25 mm breite Klebebänder der Firma Beiersdorf verwendet, welche im Handel unter dem Namen TESA® 4154 erhältlich sind. Zur Messung der Trennwerte werden die Klebebänder auf die gehärtete Beschichtung aufgewalzt und anschließend bei 40 °C unter einem Gewicht von 70 g/cm² gelagert. Nach 24 h wird die Kraft gemessen, die benötigt wird, um das jeweilige Klebeband mit einer Geschwindigkeit von 6 mm/s unter einem Schälwinkel von 180° vom Untergrund abzuziehen. Diese Kraft wird als Trennwert bezeichnet. Die allgemeine Testprozedur entspricht im wesentlichen der FINAT (Federation International des Fabricants Transformateurs d'Adhesives et Thermocollantes sur Papiers et autres Supports) Testmethode Nr. 10. Die Ergebnisse sind in Tabelle 2 zusammengefasst.

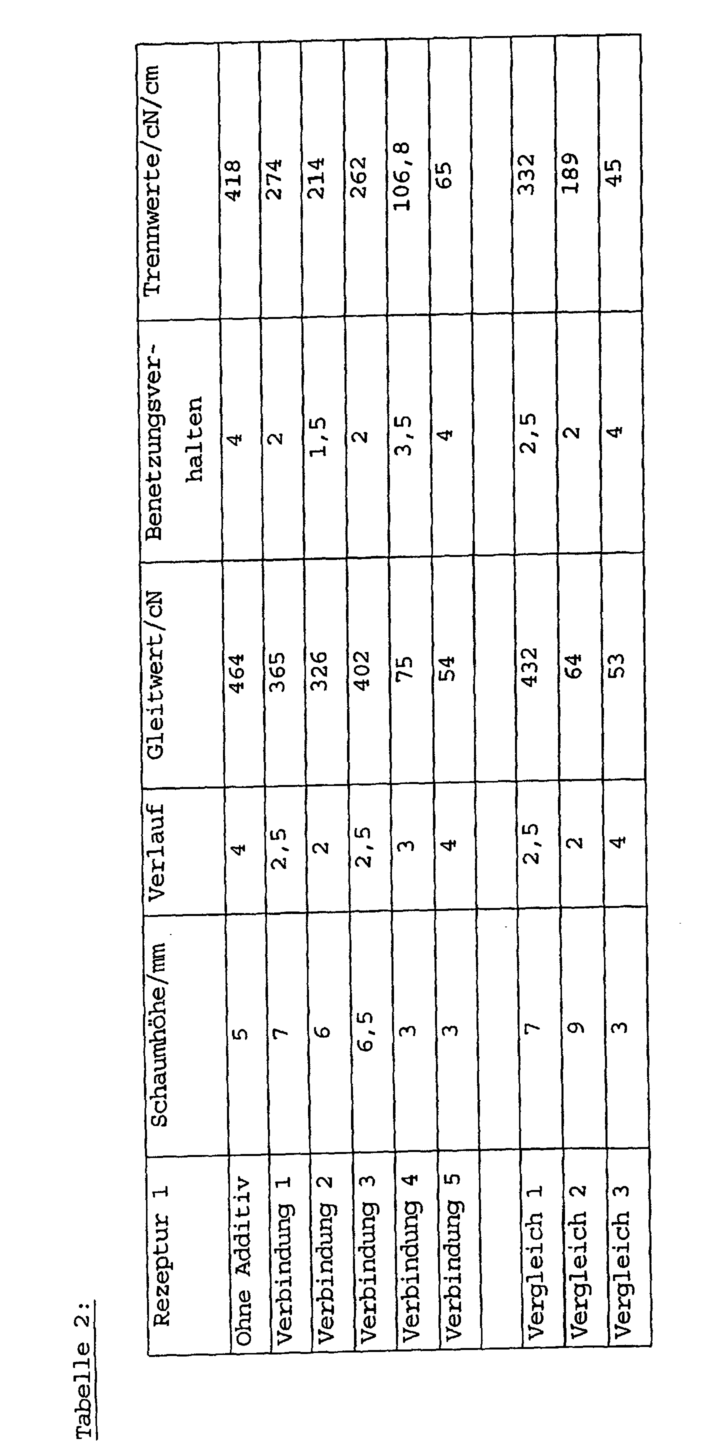

Zur Bestimmung des Schaumverhaltens der Siliconadditive beim Siebdruck, wird die kationisch strahlenhärtbare Druckfarbe (Rezeptur 2) per Siebdruck auf Polyesterfolie gedruckt. Nach der Strahlungshärtung wird der Siebdruck optisch beurteilt. Die Beurteilung erfolgt auf einer Skala von 1 bis 4, wobei 1 einen störungsfreien Druck beschreibt, 4 von starken Störungen zeugt. Die Ergebnisse sind in Tabelle 3 zusammengefasst.

**Tabelle 3:**

| **Verbindung** | **Druckbild** |
|---|---|
| Ohne Additiv | 3 |
| Verbindung 1 | 2 |
| Verbindung 2 | 1,5 |
| Verbindung 3 | 2 |
| Verbindung 4 | 2,5 |
| Verbindung 5 | 3 |
| | |
| Vergleich 1 | 2,5 |
| Vergleich 2 | 2 |
| Vergleich 3 | 3,5 |

Wie aus den vorhergehenden Tabellen 1, 2 und 3 ersichtlich ist, zeichnen sich die erfindungsgemäßen mit Oxyalkylenethergruppen modifizierten Epoxysiloxane durch ihre universelle Anwendbarkeit aus. Wie sich aus den Vergleichsbeispielen ergibt, ist die Art der Gruppe R² maßgeblich für die Tatsache, dass die erfindungsgemäß zu verwendenden mit Oxyalkylenethergruppen modifizierten Epoxysiloxane eine aktive kationische Härtung zeigen, Verlauf und Netzeigenschaften von flüssigen, kationisch strahlenhärtbaren Beschichtungen, Druckfarben und/oder Drucklacken verbessern und die Gleit- und Release-Eigenschaften der kationisch strahlengehärteten Beschichtungen, Druckfarben und/oder Drucklacke positiv beeinflussen.

Gleichzeitig zeigen die erfindungsgemäß zu verwendenden mit Oxyalkylenethergruppen modifizierten Epoxysiloxane eine geringere schaumstabilisierende Wirkung.

## Patentansprüche

1. Verwendung von mit Oxyalkylenethergruppen modifizierten Epoxypolysiloxanen, welche mindestens eine an ein Si-Atom des Epoxypolysiloxans gebundene Gruppe der allgemeinen Formel (I)
-R³-O-(CₙH₍₂ₙ₋ₘ₎R⁴ ₘO-)ₓR⁵ (I)
enthalten, worin
R³ ein zweiwertiger, gegebenenfalls substituierter Alkyloder Alkylenrest mit 2 bis 11 Kohlenstoffatomen,
n 2 bis 8,
m 0 bis 2n,
x einen Wert von 1 bis 200 hat, und
R⁴ für gleiche oder verschiedene Alkylreste mit 1 bis 20 Kohlenstoffatomen oder für gleiche oder verschiedene gegebenenfalls substituierte Phenylreste mit bis zu 20 Kohlenstoffatomen steht,
R⁵ ein Wasserstoffrest, ein gegebenenfalls substituierter Alkylrest mit 1 bis 6 Kohlenstoffatomen, ein Acylrest oder ein -O-CO-NH-R⁶ Rest ist, bei dem
R⁶ ein gegebenenfalls substituierter Alkyl- oder Arylrest ist,
wobei
die Oxyalkylensegmente -(CₙH₍₂ₙ₋ₘ₎R⁴ₘO-) innerhalb eines Oxyalkylenetherrestes untereinander verschieden sein können, sowie die Reihenfolge der einzelnen Oxyalkylensegmente - (CₙH₍₂ₙ₋ₘ₎R⁴ₘO-) beliebig sein kann und insbesondere Blockcopolymere, statistische Polymere sowie deren Kombinationen umfasst, zum Fördern der Verlauf- und Netzeigenschaften der noch flüssigen kationisch strahlenhärtende Beschichtungen, Druckfarben und/oder Drucklacken.

2. Verwendung nach Anspruch 1, **dadurch gekennzeichnet, dass** als mit Oxyalkylenethergruppen modifizierte Epoxypolysiloxane Verbindungen der allgemeinen Formel (Ia) 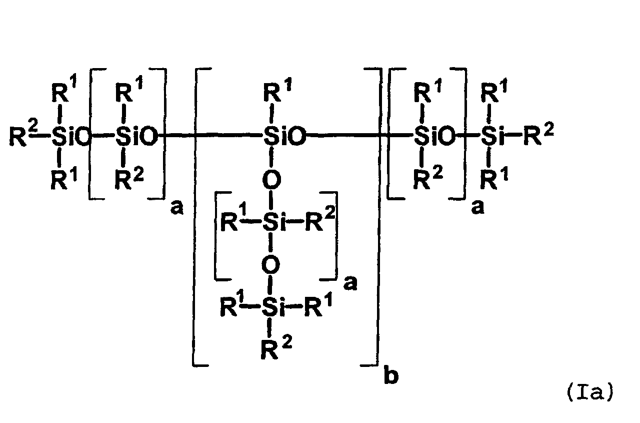 worin
R¹ im Molekül gleich oder verschieden ist und Alkylreste mit 1 bis 4 Kohlenstoffatomen bedeutet,
R² folgende Bedeutung hat:
a) Alkylreste mit 1 bis 20 Kohlenstoffatomen, Aryloder Aralkylreste,
b) Epoxyreste, die über SiC-Bindungen mit Si-Atomen des Polysiloxans verknüpft sind,
c) Oxyalkylenetherreste der allgemeinen Formel (I)
-R³-O-(CₙH₍₂ₙ₋ₘ₎R⁴ ₘO-)ₓR⁵
wobei
R³ ein zweiwertiger, gegebenenfalls substituierter Alkyl- oder Alkylenrest mit 2 bis 11 Kohlenstoffatomen,
n 2 bis 8,
m 0 bis 2n,
x einen Wert von 1 bis 200 hat, und
R⁴ für gleiche oder verschiedene Alkylreste mit 1 bis 20 Kohlenstoffatomen oder für gleiche oder verschiedene gegebenenfalls substituierte Phenylreste mit bis zu 20 Kohlenstoffatomen steht,
R⁵ ein Wasserstoffrest, ein gegebenenfalls substituierter Alkylrest mit 1 bis 6 Kohlenstoffatomen, ein Acylrest oder ein -O-CO-NH-R⁶-Rest ist, bei dem
R⁶ ein gegebenenfalls substituierter Alkyl- oder Arylrest ist, wobei
die Oxyalkylensegmente (CₙH₍₂ₙ₋ₘ₎R⁴ₘO-) innerhalb eines Oxyalkylenetherrestes untereinander verschieden sein können, sowie die Reihenfolge der einzelnen Oxyalkylensegmente (CₙH₍₂ₙ₋ₘ₎R⁴ₘO-) beliebig sein kann und insbesondere Blockcopolymere, statistische Polymere sowie deren Kombinationen umfasst,
a einen Wert von 1 bis 1000 und
b einen Wert von 0 bis 10 hat,
mit der Maßgabe, dass im durchschnittlichen Organopolysiloxanmolekül jeweils mindestens ein Rest R² die Bedeutung b) und die Bedeutung c) hat, zum Fördern der Verlauf- und Netzeigenschaften der noch flüssigen kationisch strahlenhärtende Beschichtungen, Druckfarben und/oder Drucklacken, verwendet werden.

3. Verwendung der Verbindungen gemäß Anspruch 1, **dadurch gekennzeichnet, dass** in der Formel (I) R³ ein Alkylrest mit 2 bis 6 C-Atomen, R⁴ ein Methyl-, Ethyl- oder Phenylrest, n 2 bis 8, m 0 oder 1 und x 1 bis 50 bedeuten.

4. Verwendung der Verbindungen gemäß Anspruch 2, **dadurch gekennzeichnet, dass** R¹ in der Formel (Ia) Methylreste bedeuten und a einen Wert von 1 bis 500, b einen Wert von 0 bis 10 und x einen Wert von 1 bis 100 hat.

5. Verwendung der Verbindungen gemäß den Ansprüchen 1 bis 4, **dadurch gekennzeichnet, dass** sie in Konzentrationen von 0,01 bis 10 Gew.-%, bezogen auf die Gesamtformulierung, mitverwendet werden.

6. Verwendung der Verbindungen gemäß den Ansprüchen 1 bis 5, **dadurch gekennzeichnet, dass** sie in Mischung mit härtbaren Verbindungen, welche Epoxy-, Oxiranund/oder Vinylethergruppen aufweisen, insbesondere Epoxy-, Oxiran- und/oder Vinylethergruppen enthaltenden Organo-polysiloxanen, welche jedoch frei von der Gruppe der allgemeinen Formel (I) sind, zum Fördern der Verlaufund Netzeigenschaften der noch flüssigen kationisch strahlenhärtende Beschichtungen, Druckfarben und/oder Drucklacken mitverwendet werden.

## Claims

1. Use of epoxypolysiloxanes which are modified with oxyalkylene ether groups and contain, attached to an Si atom of the epoxypolysiloxane, at least one group of the general formula (I)
-R³-O-(CₙH₍₂ₙ₋ₘ₎R⁴ ₘO-)ₓR⁵ (I)
in which
R³ is a divalent, unsubstituted or substituted alkyl or alkylene radical having 2 to 11 carbon atoms,
n is 2 to 8,
m is 0 to 2n,
x has a value of 1 to 200, and
R⁴ stands for identical or different alkyl radicals having 1 to 20 carbon atoms or for identical or different, unsubstituted or substituted phenyl radicals having up to 20 carbon atoms,
R⁵ is a hydrogen, an unsubstituted or substituted alkyl radical having 1 to 6 carbon atoms, an acyl radical or a radical -O-CO-NH-R⁶, in which
R⁶ is an unsubstituted or substituted alkyl or aryl radical,
it being possible for the oxyalkylene segments - (CₙH₍₂ₙ₋ₘ₎R⁴ₘO-) within one oxyalkylene ether radical to be different from one another and for the sequence of the individual oxyalkylene segments -(CₙH₍₂ₙ₋ₘ₎R⁴ₘO-) to be arbitrary, embracing in particular block copolymers, random polymers, and combinations thereof, for promoting the levelling and wetting properties of still-liquid cationically radiation-curing coatings, printing inks and/or print varnishes.

2. Use according to Claim 1, **characterized in that**, as epoxysiloxanes modified with oxyalkylene ether groups, compounds of the general formula (Ia) 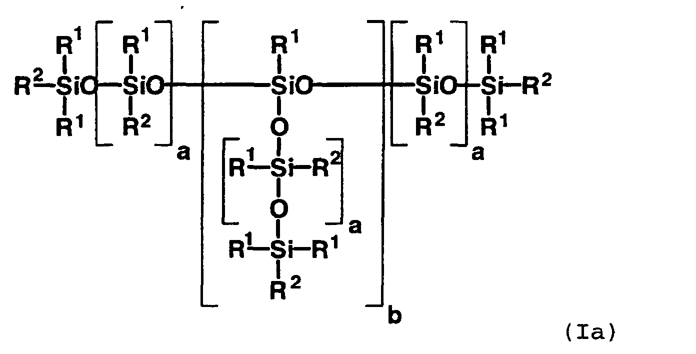 in which
R¹ is identical or different in the molecule and denotes alkyl radicals having 1 to 4 carbon atoms,
R² is defined as follows:
a) alkyl radicals having 1 to 20 carbon atoms, aryl or aralkyl radicals,
b) epoxy radicals linked via SiC bonds to Si atoms of the polysiloxane,
c) oxyalkylene ether radicals of the general formula (I)
-R³-O-(CₙH₍₂ₙ₋ₘ₎R⁴ ₘO-)ₓR⁵
in which
R³ is a divalent, unsubstituted or substituted alkyl or alkylene radical having 2 to 11 carbon atoms,
n is 2 to 8,
m is 0 to 2n,
x has a value of 1 to 200, and
R⁴ stands for identical or different alkyl radicals having 1 to 20 carbon atoms or for identical or different, unsubstituted or substituted phenyl radicals having up to 20 carbon atoms,
R⁵ is a hydrogen, an unsubstituted or substituted alkyl radical having 1 to 6 carbon atoms, an acyl radical or a radical -O-CO-NH-R⁶, in which
R⁶ is an unsubstituted or substituted alkyl or aryl radical,
it being possible for the oxyalkylene segments - (CₙH₍₂ₙ₋ₘ₎R⁴ₘO-) within one oxyalkylene ether radical to be different from one another and for the sequence of the individual oxyalkylene segments -(CₙH₍₂ₙ₋ₘ₎R⁴ₘO-) to be arbitrary, embracing in particular block copolymers, random polymers, and combinations thereof,
a has a value of 1 to 1000 and
b has a value of 0 to 10,
with the proviso that in the average organopolysiloxane molecule at least one radical R² has the definition b) and at least one radical R² has the definition c),
for promoting the levelling and wetting properties of still-liquid cationically radiation-curing coatings, printing inks and/or print varnishes.

3. Use of the compounds as set forth in Claim 1, **characterized in that** in the formula (I) R³ is an alkyl radical having 2 to 6 carbon atoms, R⁴ is a methyl, ethyl or phenyl radical, n is 2 to 8, m is 0 or 1, and x is 1 to 50.

4. Use of the compounds as set forth in Claim 2, **characterized in that** R¹ in the formula (Ia) denotes methyl radicals and a has a value of 1 to 500, b has a value of 0 to 10, and x has a value of 1 to 100.

5. Use of the compounds as set forth in any of Claims 1 to 4, in concentrations of from 0.01 to 10% by weight, based on the total formulation.

6. Use of the compounds as set forth in any of Claims 1 to 5, in a mixture with curable compounds which contain epoxy, oxirane and/or vinyl ether groups, especially organopolysiloxanes which contain epoxy, oxirane and/or vinyl ether groups that are free from the group of the general formula (I), for promoting the levelling and wetting properties of still-liquid cationically radiation-curing coatings, printing inks and/or print varnishes.

## Revendications

1. Utilisation d'époxypolysiloxanes modifiés avec des groupes oxyalkylèneéther, qui contiennent au moins un groupe lié à un atome de Si de l'époxypoly-siloxane de formule générale (I)
- R³-O-(CₙH₍₂ₙ₋ₘ₎R⁴ ₘO-)ₓR⁵ (I)
dans laquelle
R³ représente un radical alkyle ou alkylène divalent, le cas échéant substitué, comprenant 2 à 11 atomes de carbone,
n vaut 2 à 8,
m vaut 0 à 2n
x représente une valeur de 1 à 200 et
R⁴ représente des radicaux alkyle identiques ou différents comprenant 1 à 20 atomes de carbone ou des radicaux phényle identiques ou différents, le cas échéant substitués, comprenant jusqu'à 20 atomes de carbone
R⁵ représente un radical hydrogène, un radical alkyle le cas échéant substitué, comprenant 1 à 6 atomes de carbone, un radical acyle ou un radical -O-CO-NH-R⁶ dans lequel R⁶ représente un radical alkyle ou aryle, le cas échéant substitué,
les segments oxyalkylène -(CₙH₍₂ₙ₋ₘ₎R⁴ₘO-) dans un radical oxyalkylèneéther pouvant être différents les uns des autres et l'ordre des différents segments oxyalkylène -(CₙH₍₂ₙ₋ₘ₎R⁴ₘO-) pouvant être quelconque et comprenant en particulier des copolymères à blocs, des polymères statistiques ainsi que leurs combinaisons pour favoriser les propriétés d'écoulement et de réticulation des revêtements, encres d'imprimerie et/ou laques d'imprimerie encore liquides, cationiques, durcissant sous l'effet de rayonnements.

2. Utilisation selon la revendication 1, **caractérisée en ce qu'**on utilise comme époxypolysiloxanes modifiés par des groupes oxyalkylèneéther des composés de formule générale (Ia) 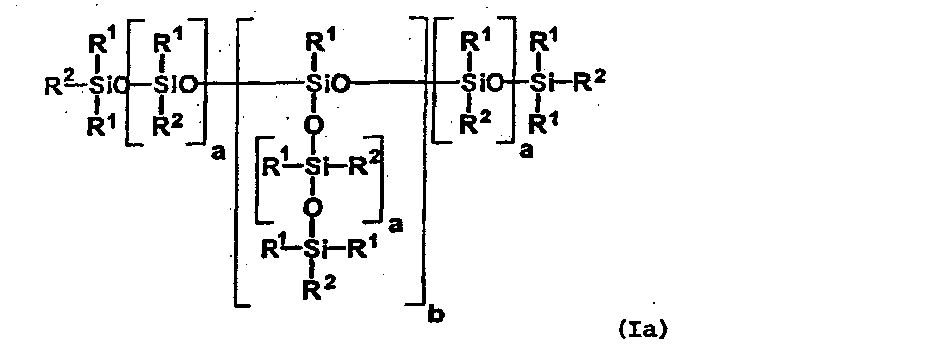 dans laquelle
R¹ dans la molécule est identique ou différent et signifie des radicaux alkyle comprenant 1 à 4 atomes de carbone,
R² a la signification suivante :
a) radicaux alkyle comprenant 1 à 20 atomes de carbone, radicaux aryle ou aralkyle,
b) radicaux époxy, liés via des liaisons SiC aux atomes de Si du polysiloxane
c) radicaux oxyalkylèneéther de formule générale (I)
-R³-O-(CₙH₍₂ₙ₋ₘ₎R⁴ ₘO-)ₓR⁵
où
R³ représente un radical alkyle ou alkylène divalent, le cas échéant substitué, comprenant 2 à 11 atomes de carbone,
n vaut 2 à 8,
m vaut 0 à 2n,
x représente une valeur de 1 à 200 et
R⁴ représente des radicaux alkyle identiques ou différents comprenant 1 à 20 atomes de carbone ou des radicaux phényle identiques ou différents, le cas échéant substitués, comprenant jusqu'à 20 atomes de carbone
R⁵ représente un radical hydrogène, un radical alkyle le cas échéant substitué, comprenant 1 à 6 atomes de carbone, un radical acyle ou un radical -O-CO-NH-R⁶ dans lequel R⁶ représente un radical alkyle ou aryle le cas échéant substitué,
les segments oxyalkylène (CₙH₍₂ₙ₋ₘ₎R⁴ₘO-) dans un radical oxyalkylèneéther pouvant être différents les uns des autres, et l'ordre des différents segments oxyalkylène (CₙH₍₂ₙ₋ₘ₎R⁴ₘO-) pouvant être quelconque et comprenant en particulier des copolymères à blocs, des polymères statistiques ainsi que leurs combinaisons,
a représente une valeur de 1 à 1000 et
b représente une valeur de 0 à 10,
à condition que dans la molécule d'organopoly-siloxane moyenne, à chaque fois au moins un radical R² a la signification b) et la signification c), pour favoriser les propriétés d'écoulement et de réticulation des revêtements, encres d'imprimerie et/ou laques d'imprimerie encore liquides, cationiques, durcissant sous l'effet des rayonnements.

3. Utilisation des composés selon la revendication 1, **caractérisée en ce que** dans la formule (I), R³ signifie un radical alkyle comprenant 2 à 6 atomes de carbone, R⁴ signifie un radical méthyle, éthyle ou phényle, n vaut 2 à 8, m vaut 0 ou 1 et x vaut 1 à 50.

4. Utilisation des composés selon la revendication 2, **caractérisée en ce que** R¹ dans la formule (Ia) signifie des radicaux méthyle et a représente une valeur de 1 à 500, b une valeur de 0 à 10 et x une valeur de 1 à 100.

5. Utilisation des composés selon les revendications 1 à 4, **caractérisée en ce qu'**ils sont utilisés en des concentrations de 0,01 à 10% en poids par rapport à la formulation totale.

6. Utilisation des composés selon les revendications 1 à 5, **caractérisée en ce qu'**ils sont utilisés en mélange avec des composés durcissables qui présentent des groupes époxy, oxiranne et/ou vinyléther, en particulier des organopolysiloxanes contenant des groupes époxy, oxiranne et/ou vinyléther, qui sont toutefois exempts des groupes de formule générale (I) pour favoriser les propriétés d'écoulement et de réticulation des revêtements, encres d'imprimerie et/ou laques d'imprimerie encore liquides, cationiques, durcissant sous l'effet de rayonnements.
